# DEMANDE DE BREVET EUROPEEN

(11) **EP 4 652 848 A1**
(43) Date de publication de la demande: **26.11.2025**
(21) Numéro de dépôt: 24305817.9
(22) Date de dépôt: 24.05.2024
(51) Int. Cl.: A21C 11/10, A21C 11/16

(54) **DISPOSITIF DE FORMAGE DE PATES ALIMENTAIRES, INSTALLATION ET PROCEDE DE FABRICATION CORRESPONDANTS**

(71) Demandeur: Lustucru Frais, 69008 Lyon (FR)
(72) Inventeur: DREUX, Vincent, 69110 SAINTE FOY LES LYON (FR)
(74) Mandataire: Cabinet Didier Martin

(57) **Abrégé**

- Dispositif de formage de pâtes alimentaires, installation et procédé de fabrication correspondants.
- L'invention concerne un dispositif de formage (1) de pâtes alimentaires comprenant :
- des buses d'extrusion (2) pour former des extrudats,
- un rouleau (4) de découpe cyclique desdits extrudats, monté mobile à rotation selon un axe de rotation (X-X'),
caractérisé en ce que ledit rouleau (4) de découpe cyclique comprend une pluralité de supports (40), une pluralité de couteaux (5) chacun porté par l'un desdits supports (40), ainsi qu'une pluralité de dispositifs de liaison chacun attachant l'un desdits couteaux (5) audit support (40) qui le porte, chaque dispositif de liaison comprenant un organe de verrouillage / déverrouillage (12) et un organe de réglage (13).
- Dispositifs et procédés de fabrication de produits alimentaires.

## Description

La présente invention se rapporte au domaine général des produits alimentaires, et plus précisément au domaine technique des pâtes alimentaires.

La présente invention concerne en particulier un dispositif de formage de pâtes alimentaires destinées à être réchauffées et/ou cuites avant d'être consommées, ainsi qu'une installation et un procédé de fabrication de telles pâtes alimentaires.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consommateurs. Il est connu, pour fabriquer industriellement de telles pâtes alimentaires sous forme de palets, boudins ou boulettes, de recourir à une opération d'extrusion d'une composition pâteuse à travers des buses d'extrusion, disposées par exemple en ligne, afin de former de façon continue des extrudats qui sont automatiquement découpés en pâtons en sortie des buses pour former lesdits palets, boudins ou boulettes. Plus précisément, les extrudats issus de la rangée de buses d'extrusion sont découpés au moyen d'un rouleau de découpe qui porte des lames allongées enroulées sur toute sa longueur et qui est associé à un rouleau d'entraînement rotatif. Ledit rouleau de découpe est disposé à l'aval des sorties des buses d'extrusion, et il tourne selon un axe de rotation sensiblement parallèle à la rangée de buses d'extrusion.

Une telle installation de formage donne globalement satisfaction, notamment car elle permet d'atteindre des cadences de fabrication intéressantes. Elle n'en présente pas moins toutefois de sérieux inconvénients.

En particulier, le recours à un rouleau de découpe disposé en regard et à distance d'une rangée de buses d'extrusion, pour former simultanément les pâtons à distance des sorties des buses, peut poser des problèmes de précision de découpe, susceptibles de conduire à une disparité de calibres et/ou à des défauts de qualité des pâtons. En effet, il s'avère en pratique très complexe, voire impossible, de faire en sorte que les lames allongées du rouleau de découpe mises en oeuvre dans l'état de la technique soient positionnées avec précision et de façon identique d'une buse d'extrusion à l'autre, en particulier sur une longue durée, surtout lorsque la cadence de fabrication est élevée.

De plus, les lames en question sont soumises à des phénomènes d'usure ou de détérioration qui ne sont pas uniformes, car ils peuvent varier d'un endroit à l'autre d'une même lame, conduisant là encore à un risque d'imprécision de découpe et d'hétérogénéité des pâtons d'une buse à l'autre. Ces phénomènes d'usure et de détérioration rendent nécessaire le recours à des opérations de maintenance et/ou de réparation, consistant par exemple à changer le rouleau. Ces opérations de maintenance s'avèrent être relativement complexes, fastidieuses et onéreuses en pratique.

En définitive, les installations connues décrites ci-avant sont délicates à exploiter et à maintenir, avec des coûts potentiellement élevés pour conserver un niveau de qualité optimal, notamment sur une longue durée avec des cadences de fabrication élevées.

Les objets assignés à l'invention visent par conséquent à remédier aux différents inconvénients exposés dans ce qui précède, et à proposer un nouveau dispositif de formage de pâtes alimentaires qui, tout en étant de conception extrêmement simple, polyvalente et robuste, permet un formage précis et fiable, avec un réglage et une maintenance facilités, et des coûts d'exploitation et de maintenance maîtrisés.

Un autre objet de l'invention vise à proposer un nouveau dispositif de formage de pâtes alimentaires qui repose sur la mise en oeuvre d'un minimum de composants mécaniques différents et dont la fabrication est bon marché et facile à industrialiser.

Un autre objet de l'invention vise à proposer un nouveau dispositif de formage de pâtes alimentaires de construction compacte.

Un autre objet de l'invention vise à proposer un nouveau dispositif de formage de pâtes alimentaires dont la conception facilite tout particulièrement la maintenance, la réparation et le nettoyage.

Un autre objet de l'invention vise à proposer un nouveau dispositif de formage de pâtes alimentaires de construction particulièrement durable.

Un autre objet de l'invention vise à proposer de nouveaux installation et procédé de fabrication de pâtes alimentaires qui permettent de fabriquer des pâtes alimentaires dans des conditions industrielles optimales, de façon particulièrement rapide, précise, fiable et bon marché, avec une maintenance et des réglages facilités.

Les objets assignés à l'invention sont atteints à l'aide d'un dispositif de formage de pâtes alimentaires destinées à être réchauffées et/ou cuites avant d'être consommées, ledit dispositif de formage comprenant :
- des buses d'extrusion par lesquelles est destinée à passer une composition pâteuse, pour former, en sortie desdites buses, des extrudats à partir desquels les pâtes alimentaires sont destinées à être formées,
- un rouleau de découpe cyclique desdits extrudats en sortie desdites buses d'extrusion, ledit rouleau de découpe cyclique étant monté mobile à rotation relativement auxdites buses d'extrusion, selon un axe de rotation,
caractérisé en ce que ledit rouleau de découpe cyclique comprend une pluralité de supports, une pluralité de couteaux chacun porté par l'un desdits supports, ainsi qu'une pluralité de dispositifs de liaison chacun attachant l'un desdits couteaux audit support qui le porte, chaque dispositif de liaison comprenant :
- un organe de verrouillage / déverrouillage conçu pour évoluer entre d'une part une configuration de déverrouillage dans laquelle il autorise un déplacement relatif du couteau et du support qui le porte et d'autre part une configuration de verrouillage dans laquelle il immobilise lesdits couteau et support l'un par rapport à l'autre,
- et un organe de réglage conçu pour ajuster la position relative dudit couteau et du support qui le porte, alors que l'organe de verrouillage / déverrouillage est en configuration de déverrouillage.

Les objets assignés à l'invention sont également atteints à l'aide d'une installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage selon l'invention.

Les objets assignés à l'invention sont enfin atteints à l'aide d'un procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion pour former, en sortie desdites buses, des extrudats à partir desquels les pâtes alimentaires sont destinées à être formées,
- une opération de découpe cyclique desdits extrudats en sortie desdites buses d'extrusion,
caractérisé en ce que ladite opération de découpe cyclique est effectuée au moyen d'un rouleau de découpe cyclique qui tourne relativement auxdites buses d'extrusion, selon un axe de rotation, ledit rouleau de découpe cyclique comprenant une pluralité de supports, une pluralité de couteaux chacun porté par l'un desdits supports, ainsi qu'une pluralité de dispositifs de liaison chacun attachant l'un desdits couteaux audit support qui le porte, chaque dispositif de liaison comprenant :
- un organe de verrouillage / déverrouillage conçu pour évoluer entre d'une part une configuration de déverrouillage dans laquelle il autorise un déplacement relatif du couteau et du support qui le porte et d'autre part une configuration de verrouillage dans laquelle il immobilise lesdits couteau et support l'un par rapport à l'autre,
- et un organe de réglage conçu pour ajuster la position relative dudit couteau et du support qui le porte, alors que l'organe de verrouillage / déverrouillage est en configuration de déverrouillage.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
La figure 1 illustre, selon une vue schématique en perspective avant, un détail de réalisation d'un dispositif de formage de pâtes alimentaires conforme à l'invention.
La figure 2 illustre, selon une vue schématique en perspective arrière, le détail de réalisation du dispositif de formage de la figure 1.

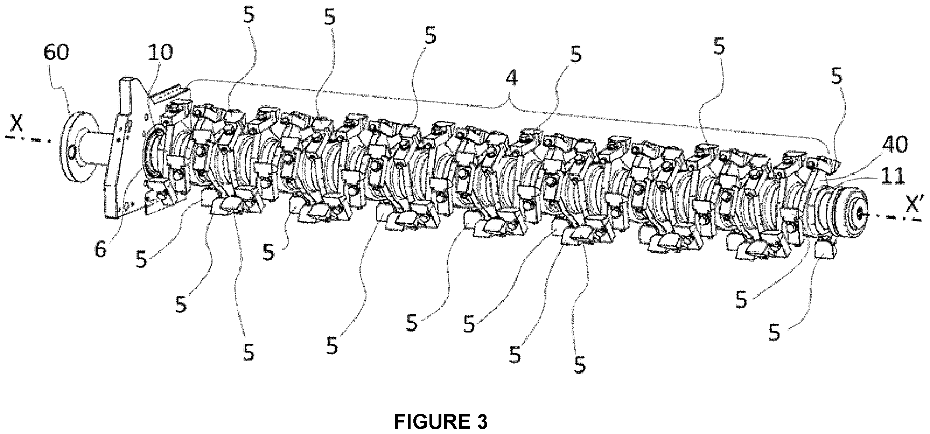

La figure 3 illustre, selon une vue schématique en perspective, un rouleau de découpe modulaire qui fait partie du dispositif de formage des figures 1 et 2.
La figure 4 est une vue schématique en coupe transversale du détail de réalisation des figures 1 et 2.

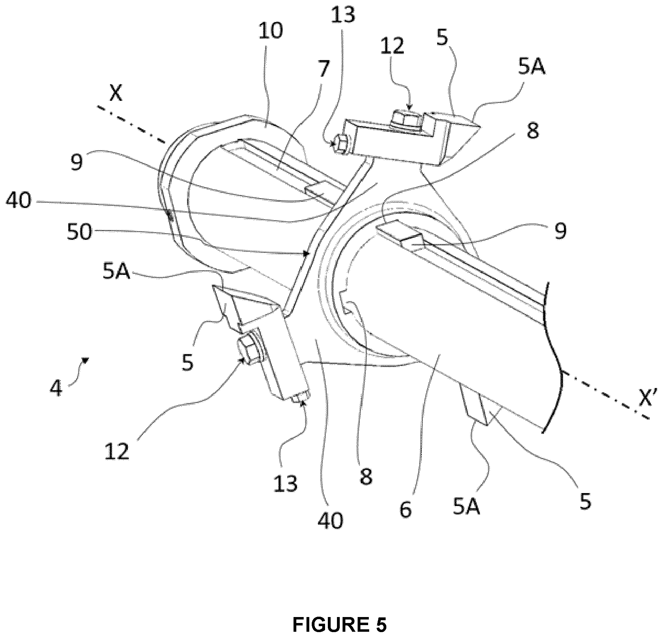

La figure 5 illustre, selon une vue schématique en perspective, un détail de réalisation du rouleau de découpe mis en oeuvre par le dispositif de formage illustré aux figures précédentes, avec en particulier un arbre central sur lequel est ménagée une rainure de clavette, un module qui est muni d'une pluralité de mortaises et est enfilé sur l'arbre central, ainsi qu'une clavette insérée à la fois dans l'une desdites mortaises et ladite rainure pour bloquer ainsi en rotation ledit module par rapport à l'arbre central.

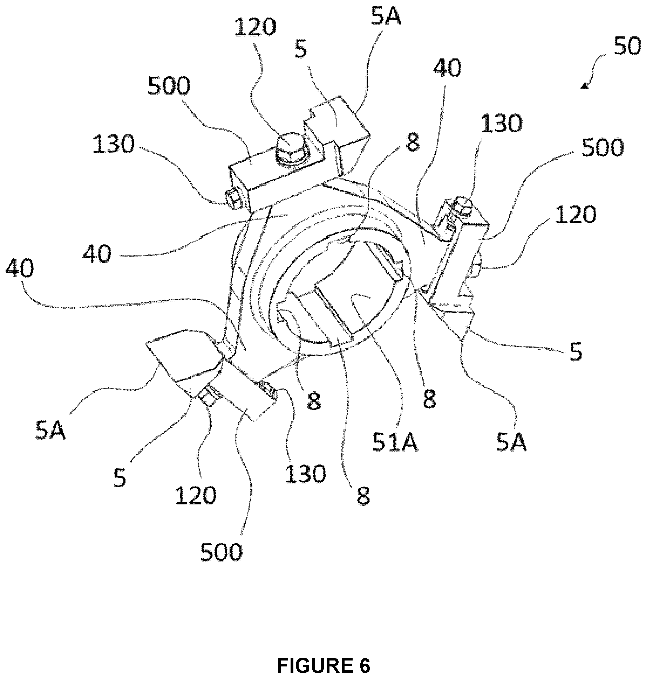

La figure 6 illustre, selon une vue schématique en perspective, un module du rouleau de découpe modulaire mis en oeuvre par le dispositif de formage illustré aux figures précédentes.

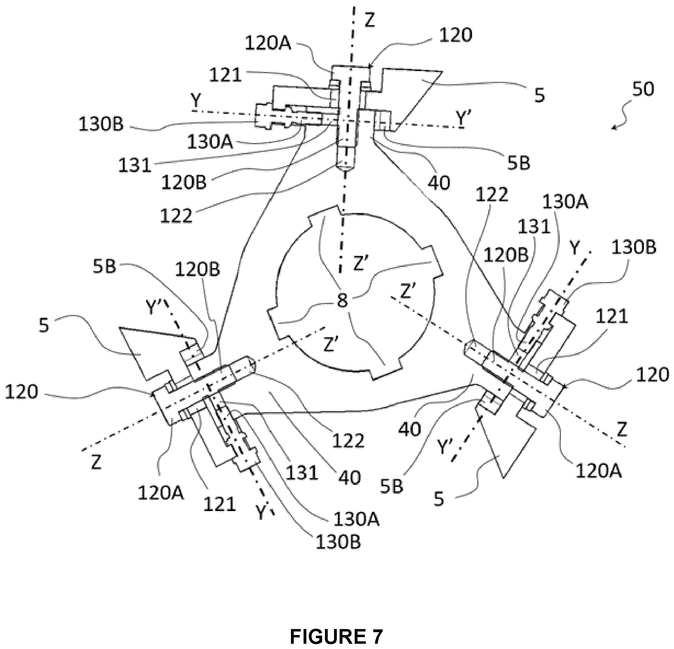

La figure 7 illustre, selon une vue schématique en coupe transversale, le module de la figure 6.

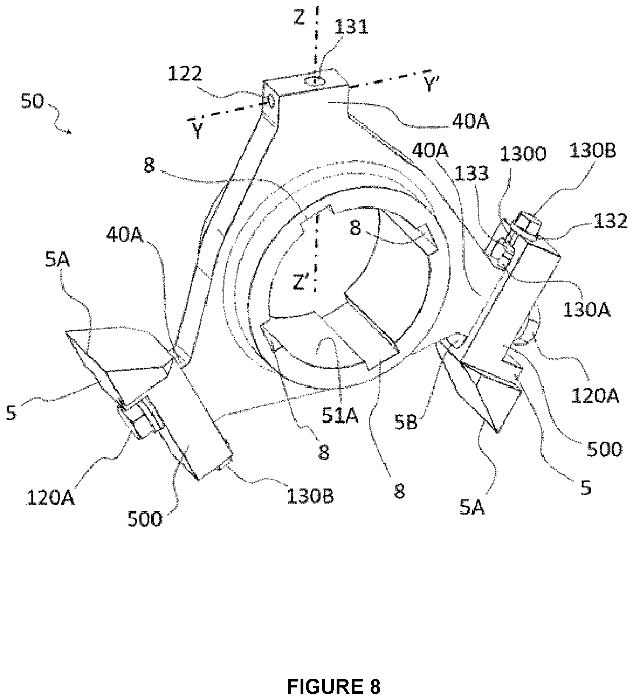

La figure 8 illustre, selon une vue schématique en perspective, le module des figures 6 et 7, avec des pièces omises (couteau, vis de serrage et vis de réglage).
La figure 9 illustre, selon une vue schématique en perspective de dessous, les pièces omises dans la figure 8, savoir un couteau, une vis de réglage et une vis de serrage.

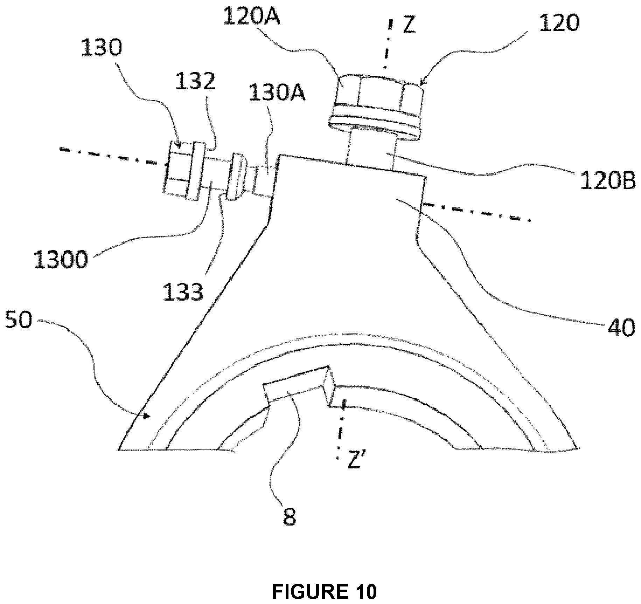

La figure 10 illustre, selon une vue schématique en perspective, un détail de réalisation du module des figures 6 et 7, où le couteau a été omis pour faciliter la visualisation du support dudit couteau et des vis de serrage et de réglage.

L'invention concerne un dispositif de formage 1 de pâtes alimentaires, qui est destiné à faire partie d'une installation de fabrication de pâtes alimentaires. Ladite installation de fabrication, qui constitue en tant que telle l'un des aspects de l'invention, est donc avantageusement une installation de pastification, pour fabriquer des pâtes alimentaires. L'installation de fabrication en question, qui inclut ledit dispositif de formage 1 selon l'invention, est avantageusement une installation de fabrication industrielle automatisée, conçue pour assurer de préférence une fabrication de pâtes en continu. De la même manière, le dispositif de formage 1 selon l'invention est lui-même un dispositif de formage industriel automatisé, conçu pour assurer de préférence un formage des pâtes alimentaires en continu.

Les pâtes alimentaires formées au moyen du dispositif de formage 1 selon l'invention, et fabriquées au moyen de l'installation de fabrication selon l'invention (laquelle inclut ledit dispositif de formage 1), sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition. Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif de formage 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un coeur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en oeuvre d'une céréale (ou d'un mélange de céréales) qui contient des protéines (typiquement des prolamines et des glutamines) capable de former du gluten confère à la composition pâteuse une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en oeuvre pour obtenir la composition pâteuse est alors préférentiellement une farine de blé tendre, tandis que ladite semoule de céréales avantageusement mise en oeuvre pour obtenir la composition pâteuse est préférentiellement une farine de blé dur. Bien évidemment, d'autres céréales peuvent être mises en oeuvre, comme par exemple l'orge, l'épeautre, le seigle, ou encore l'avoine, cette liste n'étant pas limitative.

Le mélange à partir duquel est formé la composition pâteuse peut inclure en outre d'autres ingrédients en plus de la farine et/ou de la semoule de céréales et du liquide d'hydratation. Ces ingrédients complémentaires peuvent inclure par exemple des oeufs, du lait, du gluten, des légumes ou extraits de légumes, ou encore des aromates, ou tout autre adjuvant.

Selon un mode de réalisation préférentiel particulier, le mélange à partir duquel est formé la composition pâteuse inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de tubercule de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*)*.*

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen du dispositif 1 de fabrication selon l'invention se présentent sous la forme de boulettes, boudins et/ou palets formés à partir de la composition pâteuse, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen du dispositif 1 sont sous forme de boulettes ou boudins, le mélange permettant d'obtenir la composition pâteuse est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Ladite installation de fabrication inclut ainsi au moins le dispositif de formage 1 selon l'invention, ainsi qu'au moins un poste de fabrication de ladite composition pâteuse à partir de laquelle lesdites pâtes alimentaires sont destinées à être fabriquées. Ledit poste de fabrication de la composition pâteuse inclut par exemple des moyens de malaxage et cuisson des ingrédients formant la composition pâteuse, et par exemple des moyens de malaxage et cuisson d'un mélange formé à partir d'au moins d'une farine et/ou d'une semoule d'au moins une céréale contenant des protéines capables de former du gluten et d'un liquide d'hydratation.

De préférence, ladite installation de fabrication de pâtes alimentaires comprend une cuve conçue pour contenir ladite composition pâteuse à partir de laquelle les pâtes alimentaires sont destinées à être formées, ladite cuve étant avantageusement conçue pour alimenter ledit dispositif de formage 1 et/ou faisant partie de ce dernier.

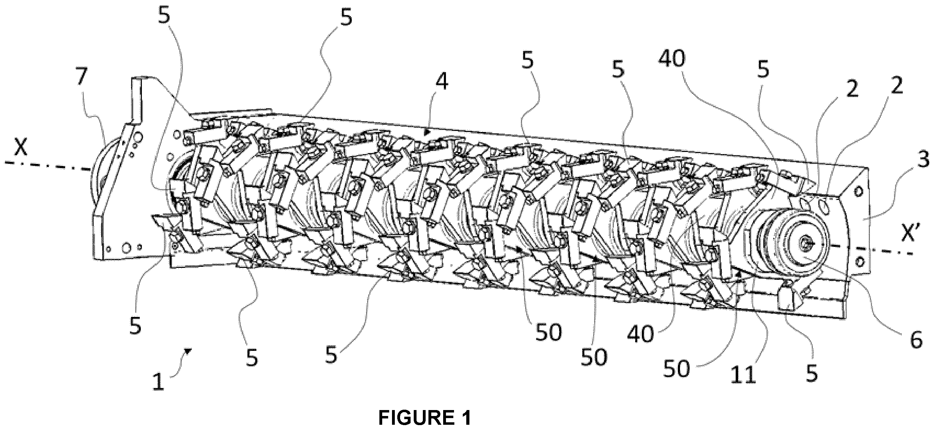

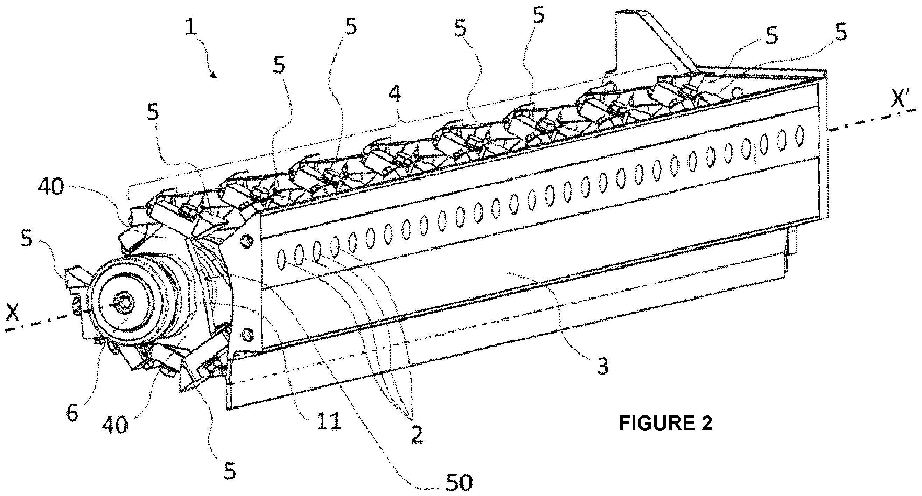

Comme illustré par les figures 1, 2 et 4, le dispositif de formage 1 selon l'invention comprend des buses d'extrusion 2 par lesquelles est destinée à passer ladite composition pâteuse, pour former, en sortie desdites buses 2, des extrudats à partir desquels les pâtes alimentaires sont destinées à être formées. Lesdites buses d'extrusion 2 sont par exemple associées à la cuve précitée pour être par exemple alimentées en composition pâteuse provenant de ladite cuve. Selon ce mode de réalisation préférentiel, les buses d'extrusion 2 sont en communication fluidique avec l'intérieur de la cuve, pour permettre un écoulement de la composition pâteuse contenue dans la cuve par les buses d'extrusion 2, vers l'extérieur. Les buses d'extrusion 2 se présentent avantageusement, comme illustré aux figures, sous la forme d'orifices, par exemple de forme circulaire, ménagés à travers l'épaisseur d'une plaque 3 (par exemple métallique) qui forme une filière d'extrusion. Lesdites buses d'extrusion 2 sont avantageusement disposées en rang, les unes à côté et à distance des autres, comme illustré. Ledit rang de buses d'extrusion 2 est avantageusement rectiligne et horizontal, comme illustré aux figures. Il est cependant parfaitement envisageable de prévoir une pluralité de rangs, et/ou de recourir à un ou plusieurs rangs qui s'étendent selon des directions rectilignes autres qu'horizontales, ou encore selon des profils curvilignes, sans pour autant que l'on sorte du cadre de l'invention.

La composition pâteuse est avantageusement destinée à passer simultanément à travers toutes les buses d'extrusion 2, de façon continue, de sorte que des extrudats, sous forme de cordons continus de composition pâteuse, sortent desdites buses d'extrusion 2.

Dans le cas où le dispositif 1 est destiné à fabriquer des pâtes alimentaires farcies, ledit dispositif 1 est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce. Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en oeuvre, selon notamment la nature de la composition pâteuse et / ou de la farce, ou encore selon le profil organoleptique et / ou nutritionnel recherché.

Conformément à l'invention, le dispositif de formage 1 comprend également un rouleau 4 de découpe cyclique desdits extrudats en sortie desdites buses d'extrusion 2.

Le rouleau 4 de découpe est avantageusement conçu pour découper automatiquement les extrudats issus de chacune des buses d'extrusion 2 en portions élémentaires (ou pâtons), de façon cyclique, pour obtenir par exemple des boulettes, boudins et/ou palets de composition pâteuse. Comme illustré aux figures, le rouleau 4 de découpe cyclique est avantageusement disposé en sortie des buses d'extrusion 2, c'est-à-dire à l'aval de ces dernières par rapport au sens d'écoulement de la composition pâteuse dans les buses 2. Le rouleau 4 de découpe cyclique permet ainsi avantageusement de découper de manière continue et cyclique les extrudats en sortie des buses d'extrusion 2 pour former des pâtons élémentaires (correspondant chacun à des tronçons d'extrudat), de dimensions prédéterminées, à une cadence prédéterminée impartie par la fréquence de découpe et la vitesse d'extrusion.

Comme illustré aux figures, ledit rouleau 4 de découpe cyclique est monté mobile à rotation, relativement auxdites buses d'extrusion 2, selon un axe de rotation X-X'. Avantageusement, ledit dispositif de formage 1 comprend un bâti qui supporte les buses d'extrusion 2 ainsi que le rouleau 4 de découpe cyclique. Lesdites buses d'extrusion 2 sont avantageusement fixes par rapport audit bâti, tandis que ledit rouleau 4 de découpe cyclique est monté à rotation par rapport audit bâti, selon l'axe de rotation X-X'. Le dispositif de formage 1 comprend avantageusement un moteur (par exemple électrique) qui est relié audit rouleau 4 de découpe cyclique pour entraîner ce dernier en rotation selon l'axe de rotation X-X', de préférence à une vitesse prédéterminée constante. De préférence, ledit rouleau 4 de découpe cyclique s'étend longitudinalement selon une direction d'extension longitudinale sensiblement parallèle audit axe de rotation X-X'. Dans ce mode de réalisation préférentiel, qui correspond à celui illustré aux figures, le rouleau 4 de découpe cyclique affecte la forme globale d'un cylindre muni d'arêtes tranchantes à sa périphérie, comme cela sera décrit plus en détail dans ce qui suit. Le rouleau 4 de découpe cyclique est avantageusement disposé au droit et en regard des buses d'extrusion 2 (comme illustré), pour couper chaque extrudat de façon cyclique (sous l'effet de ladite rotation, avantageusement impartie par le moteur), sensiblement immédiatement à la sortie des buses d'extrusion 2.

Comme illustré aux figures, ledit rouleau 4 de découpe cyclique comprend une pluralité de supports 40, ainsi qu'une pluralité de couteaux 5 chacun porté par l'un desdits supports 40. De préférence chaque support 40 se présente sous la forme d'une excroissance (du genre socle ou pied), qui fait saillie radialement par rapport à l'axe de rotation X-X', et est par exemple réalisé en un matériau métallique (par exemple de l'acier inoxydable). Avantageusement, lesdits couteaux 5 sont des couteaux individuels, qui sont distincts et distants les uns des autres. Lesdits couteaux 5 sont avantageusement identiques les uns aux autres, et sont de préférence réalisés en un matériau métallique, par exemple en laiton. Chaque couteau 5 est disposé en périphérie du rouleau 4, comme illustré aux figures. Les couteaux 5 de ladite pluralité de couteaux qui équipe le rouleau 4 de découpe cyclique sont espacés les uns des autres, et forment des excroissances localisées tranchantes, indépendantes les unes des autres. Cette configuration permet en particulier de distribuer efficacement de la farine (ou tout autre ingrédient de lubrification pulvérulent ou liquide) sur les extrudats issus des buses 2, à partir par exemple d'une réserve de farine disposée avantageusement au-dessus du rouleau 4 de découpe. La farine peut ainsi circuler aisément dans les espaces interstitiels qui séparent lesdits couteaux 5 entre eux, sans être bloquée par ces derniers, ce qui permet un farinage efficace et ainsi une lubrification optimale.

Comme illustré aux figures, lesdits couteaux 5 sont de préférence répartis selon une distribution hélicoïdale le long dudit axe de rotation X-X'. En d'autres termes, lesdits couteaux 5 sont disposés le long du rouleau 4 de découpe cyclique selon une distribution en hélice, en spirale. Cela signifie que les couteaux individuels 5 sont disposés en enroulement autour de l'axe de rotation X-X', c'est-à-dire qu'ils forment des spires autour dudit axe de rotation X-X'. Grâce à cet agencement hélicoïdal, les extrudats issus des buses d'extrusion 2 sont découpés les uns après les autres de façon cyclique (i.e. successivement de manière cyclique), et non tous en même temps de manière cyclique (i.e. simultanément de manière cyclique). La répartition hélicoïdale des couteaux 5 permet d'assurer ainsi un cycle de découpe séquentielle qui étale les efforts mécaniques dans le temps et le long du rouleau 4 de découpe, limitant ainsi les sollicitations mécaniques susceptibles de détériorer le matériel et/ou d'affecter la précision de découpe. Ainsi, la mise en oeuvre de couteaux individuels 5 distincts, espacés les uns des autres, combinée avec une répartition hélicoïdale desdits couteaux 5 conduit à une efficacité, robustesse et précision de découpe optimales.

Lesdits couteaux 5 peuvent être répartis le long de l'axe de rotation X-X' pour former une seule et même hélice qui s'étend par exemple sur toute la longueur du rouleau 4 de découpe cyclique, ou encore, alternativement, pour former plusieurs hélices, parallèles ou entrelacées ou entrecroisées, qui s'étendent sur toute la longueur du rouleau 4 de découpe. Le recours à une distribution des couteaux 5 selon plusieurs hélices (de préférence parallèles entre elles) le long du rouleau 4 est préféré, comme illustré aux figures, car il permet d'atteindre une cadence de fabrication optimale tout en conférant une grande robustesse et durabilité au rouleau 4 de découpe.

Avantageusement, lesdits couteaux 5 sont destinés à suivre des trajectoires circulaires respectives, sous l'effet de la rotation dudit rouleau 4 de découpe cyclique.

Avantageusement, chaque couteau 5 présente une arête de coupe 5A qui s'étend sensiblement parallèlement audit axe de rotation X-X'. Chaque arête de coupe 5A forme ainsi un bord tranchant, avantageusement formé par la jonction de deux pans inclinés l'un par rapport à l'autre, comme illustré aux figures. Avantageusement, chaque couteau 5 comprend un bloc de coupe de forme sensiblement polyédrique qui présente deux faces planes inclinées l'une par rapport à l'autre et dont l'intersection forme ladite arête de coupe 5A. Le bloc de coupe présente ainsi un caractère relativement massif, qui contribue à la robustesse du couteau 5, ainsi qu'à sa fiabilité et à sa précision.

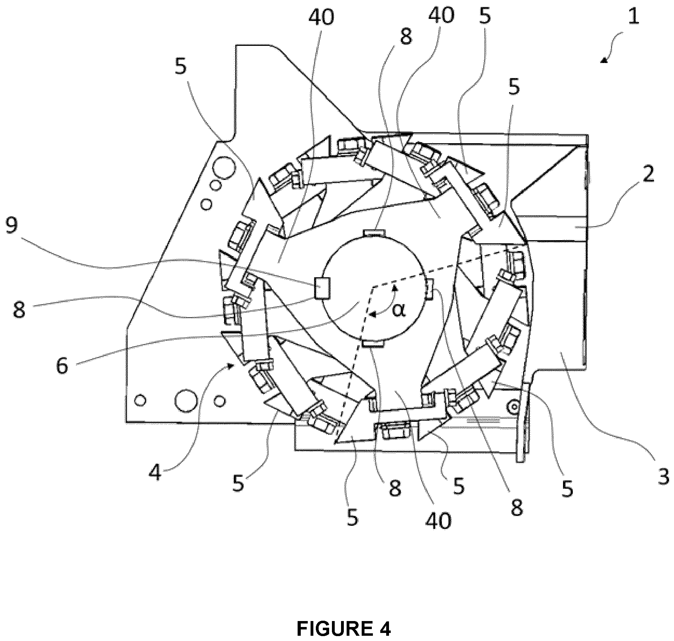

Chaque arête de coupe 5A est avantageusement rectiligne, parallèle audit axe de rotation X-X' et à équidistance de ce dernier. Ainsi, la trajectoire opérée par chaque arête de coupe 5A lors de la mise en rotation du rouleau 4 selon l'axe de rotation X-X' s'inscrit dans un cylindre de révolution d'axe X-X', ledit cylindre venant préférentiellement tangenter la sortie de chaque buse d'extrusion 2, comme cela ressort en particulier de la figure 4. Chaque buse d'extrusion 2 est avantageusement positionnée au droit d'une seule desdites trajectoires circulaires suivies par lesdits couteaux 5, pour que chaque couteau 5 assure la découpe cyclique d'un seul desdits extrudats issu d'une seule desdites buses d'extrusion 2. Grâce à cette mesure technique, la découpe est précise et les couteaux 5 sont préservés de manière optimale de toute détérioration.

Avantageusement, lesdits couteaux 5 sont répartis en une pluralité de groupes de n couteaux 5, avec n ≥ 2, et de préférence n ≥ 3. Chacun desdits groupes de n couteaux présente une symétrie de rotation discrète d'ordre n selon ledit axe de rotation X-X'. Lesdits groupes de n couteaux 5 sont avantageusement répartis à intervalles réguliers, en rang les uns derrière les autres le long dudit axe de rotation X-X', avec de préférence un décalage angulaire entre deux groupes adjacents. De préférence, ledit décalage angulaire est conçu pour réaliser ladite distribution hélicoïdale le long dudit axe de rotation X-X' évoquée précédemment. Selon ce mode de réalisation préférentiel, du fait dudit décalage angulaire, les couteaux 5 de chaque groupe de couteaux 5 adjacents au sein du rang ne sont pas alignés selon la direction d'extension longitudinale (parallèle à l'axe de rotation X-X'), de sorte à suivre un profil en hélice le long du rouleau 4. Ceci permet de faire en sorte que les extrudats issus des buses d'extrusion 2 soient découpés les uns après les autres, de façon cyclique, et non tous en même temps de manière cyclique, avec les avantages (énoncés précédemment) qui découlent d'un tel cycle de découpes successives le long du rouleau 4.

Lesdits groupes de n couteaux 5 sont avantageusement identiques entre eux. Dans le mode de réalisation préférentiel illustré aux figures, les couteaux 5 sont répartis en une pluralité de groupes identiques de trois couteaux (c'est-à-dire que n = 3), chacun desdits groupes présentant une symétrie de rotation discrète d'ordre 3 selon l'axe de rotation X-X'. Cela signifie que les couteaux 5 d'un même groupe sont avantageusement disposés selon une répartition angulaire régulière autour de l'axe de rotation X-X', comme illustré aux figures. Lesdits couteaux 5 d'un même groupe sont en d'autres termes disposés à équidistance les uns des autres, c'est-à-dire qu'ils sont équi-angulairement répartis, en étant en l'espèce séparés deux à deux d'un angle α sensiblement égal à 120°. Dans le mode de réalisation illustré aux figures, chaque groupe de n couteaux (avec en l'espèce n = 3) est avantageusement décalé angulairement avec chaque autre groupe qui lui est adjacent, de façon à distribuer les couteaux 5 en hélice autour de l'axe de rotation X-X'. Dans ce mode de réalisation, où chaque groupe inclut trois couteaux 5 équi-angulairement répartis autour de l'axe X-X', les couteaux 5 sont agencés pour former trois hélices parallèles et de même pas qui s'étendent sur toute la longueur du rouleau 4, autour de l'axe X-X'.

Avantageusement, les couteaux 5 d'un même groupe sont sensiblement coplanaires, c'est-à-dire qu'ils sont tous sécants avec un même plan médian (qui est avantageusement un plan de symétrie pour le groupe concerné) perpendiculaire à l'axe de rotation X-X', lesdits plans médians de chaque groupe étant espacés les uns des autres. Grâce à cet espacement, il est possible de distribuer efficacement de la farine (ou tout autre ingrédient de lubrification pulvérulent ou liquide) sur les extrudats issus des buses 2, à partir par exemple d'une réserve de farine disposée avantageusement au-dessus du rouleau 4 de découpe. La farine peut ainsi circuler aisément entre les couteaux 5, ce qui permet un farinage efficace ainsi qu'une lubrification optimale.

Avantageusement, le rouleau 4 de découpe comprend une âme centrale allongée qui s'étend longitudinalement de façon parallèle audit axe de rotation X-X', de préférence coaxialement à ce dernier. Avantageusement, lesdits supports 40 font localement saillie de ladite âme allongée. En d'autres termes, l'âme centrale allongée forme avantageusement un axe central à partir duquel s'étendent radialement lesdits supports 40, qui portent chacun à leur extrémité libre au moins un couteau 5, et de préférence un seul couteau 5.

Dans le mode de réalisation préférentiel illustré aux figures, le rouleau 4 de découpe cyclique est modulaire, c'est-à-dire qu'il est formé d'un ensemble de modules (composants élémentaires) associés entre eux pour former une unité de découpe monobloc, qui constitue ledit rouleau 4 de découpe cyclique. Plus précisément, le rouleau 4 de découpe comprend une pluralité de modules 50, chacun desdits modules 50 étant constitué d'une unité individuelle distincte et indépendante. Lesdits modules 50 sont de préférence identiques les uns aux autres, ce qui permet un haut degré de standardisation. Chacun des modules 50 comprend avantageusement au moins l'un desdits couteaux 5 avec le support 40 qui le porte. Avantageusement, chaque module 50 comprend une pluralité desdits couteaux 5 avec lesdits supports 40 qui les portent respectivement, les couteaux 5 de ladite pluralité de couteaux 5 étant préférentiellement disposés selon une distribution angulaire régulière autour dudit axe de rotation X-X'. De façon avantageuse, chaque module 50 présente une symétrie de rotation discrète d'ordre n selon ledit axe de rotation X-X', avec n ≥ 2, de préférence avec n ≥ 3. Dans le mode de réalisation illustré aux figures, chaque module 50 présente une symétrie de rotation discrète d'ordre 3, c'est-à-dire que chacun desdits modules 50 inclut trois supports 40 portant trois couteaux 5 qui sont équi-angulairement répartis.

Avantageusement, chaque module 50 forme l'un desdits groupes de n couteaux 5 évoqués précédemment. Par exemple, dans le mode de réalisation préférentiel illustré aux figures, les couteaux 5 sont répartis en une pluralité de groupes de trois couteaux, chaque groupe de trois couteaux étant lui-même formé par l'un desdits modules 50. Chaque module 50 est avantageusement réalisé en un matériau métallique, par exemple en acier inoxydable. Comme illustré aux figures, lesdits modules 50 sont avantageusement assemblés en rang les uns aux autres pour former un sous-ensemble unitaire de modules 50 immobilisés les uns par rapport aux autres. En d'autres termes, les modules 50 sont attachés les uns aux autres, directement ou par l'intermédiaire d'une pièce de liaison (comme dans le mode de réalisation illustré aux figures), les uns derrière les autres (i.e. les uns à la suite des autres), pour former un rang de modules 50 dans lequel chaque module 50 est interposé entre deux autres modules 50 (à l'exception bien sûr des deux modules 50 extrémaux situés respectivement à chaque extrémité du rang formant le sous-ensemble unitaire de modules 50). Chaque module 50 est avantageusement formé par une pièce multipode (en l'espèce une pièce tripode selon le mode de réalisation illustré aux figures) qui forme lesdits supports 40. Le rang de pièces multipodes assemblées entre elles forme ainsi avantageusement à la fois l'âme centrale allongée et les supports 40 qui portent les couteaux 5.

La liaison mécanique mise en oeuvre pour relier tous les modules 50 les uns aux autres est avantageusement une liaison qui permet d'immobiliser lesdits modules 50 les uns par rapport aux autres, au moins en rotation. Cela signifie qu'au sein dudit sous-ensemble unitaire de modules 50, lesdits modules 50 ne jouissent avantageusement d'aucune faculté de mobilité les uns par rapport aux autres, en particulier en rotation. Avantageusement, lesdits modules 50 sont assemblés en rang les uns aux autres de façon démontable. Il est ainsi possible d'assembler / désassembler chaque module 50 du sous-ensemble unitaire de modules 50, ce qui permet de modifier à volonté la configuration du rouleau 4 de découpe, de façon extrêmement simple et rapide, pour tenir compte par exemple d'un changement de filière d'extrusion 3, et faciliter également la maintenance et la réparation du rouleau 4 de découpe.

Avantageusement, le rouleau 4 de découpe comprend un arbre central 6, qui est coaxial audit axe de rotation X-X' et qui est avantageusement conçu pour impartir au sous-ensemble unitaire de modules 50 un mouvement de rotation selon l'axe de rotation X-X'. Ledit arbre central 6 est avantageusement réalisé en métal, par exemple en acier inoxydable. L'arbre central 6 forme ainsi un arbre de transmission, qui présente avantageusement une forme globalement cylindrique, pleine ou creuse (forme tubulaire). Ledit arbre central 6 est avantageusement pourvu, à l'une de ses extrémités, d'un flasque 60. Ledit flasque 60 est relié à un arbre de sortie du moteur précité, qui assure la rotation, à une vitesse prédéterminée, de l'arbre central 6 selon l'axe de rotation X-X'.

Avantageusement, et comme illustré aux figures, chacun desdits modules 50 inclut un moyeu qui est pourvu d'un orifice central et est enfilé sur ledit arbre central 6 pour que ce dernier passe par l'orifice central de chaque moyeu. Tous les modules 50 sont ainsi avantageusement enfilés les uns à la suite des autres, sur et le long de l'arbre central 6, lequel traverse les moyeux de chaque module 50. Le rang de moyeux disposés les uns à la suite des autres, de préférence en contact deux à deux, forme ainsi avantageusement, avec l'arbre central 6, ladite âme centrale allongée évoquée précédemment. Chaque moyeu forme avantageusement, dans ce mode de réalisation, un manchon (ou bague) enfilé sur l'arbre central 6 et portant sur sa surface extérieure, en périphérie, les supports 40 qui eux-mêmes portent les couteaux 5. Les supports 40 forment ainsi des rayons qui relient respectivement chaque couteau 5 au moyeu qui les porte. Les moyeux viennent avantageusement en butée les uns contre les autres, c'est-à-dire que le moyeu d'un module 50 donné vient axialement en butée contre le moyeu d'un autre module 50 qui lui est adjacent dans ledit rang de modules 50 formant le sous-ensemble unitaire.

Avantageusement, afin de permettre à l'arbre central 6 d'entraîner en rotation les modules 50 et assurer ainsi l'opération de découpe cyclique séquentielle en sortie des buses d'extrusion 2, le rouleau 4 de découpe comprend des moyens de liaison en rotation de chaque moyeu audit arbre central 6. Lesdits moyens de liaison en rotation comprennent par exemple, conformément au mode de réalisation illustré aux figures, des moyens de liaison par clavetage. Dans ce mode de réalisation préférentiel, chaque moyeu comprend une paroi annulaire 51A qui délimite ledit orifice central, lesdits moyens de liaison en rotation comprenant quant à eux :
- au moins des rainure de clavette 7 d'une part et mortaise 8 d'autre part ménagées respectivement sur l'arbre central 6 d'une part et sur chaque paroi annulaire 51A de chaque module 50 d'autre part.
- des clavettes 9, qui sont chacune reçues à la fois dans lesdites rainure 7 et mortaise 8, pour immobiliser ainsi en rotation chaque module 50 par rapport audit arbre central 6.

Ainsi, chaque module 50 est avantageusement fixé en rotation, selon l'axe de rotation X-X', audit arbre central 6 par une clavette 9 qui est insérée d'une part dans une rainure de clavette 7 ménagée à la surface de l'arbre central 6, comme illustré, et d'autre part dans une mortaise 8 ménagée sur la paroi annulaire 51A de chaque module 50. La rainure de clavette 7 se présente avantageusement sous la forme d'une gorge longitudinale ménagée sensiblement sur toute la longueur de l'arbre central 6, parallèlement à la direction d'extension longitudinale et à l'axe de rotation X-X'. Ladite gorge présente par exemple une section transversale rectangulaire. De la même façon, chaque mortaise 8 se présente elle aussi sous la forme d'une gorge, par exemple de section rectangulaire, tandis que chaque clavette 9 présente une forme par exemple sensiblement parallélépipédique.

Afin d'assurer un blocage axial des modules 50 enfilés sur l'arbre central 6, le rouleau 4 de découpe comprend par exemple des butées latérales gauche 10 et droite 11 qui sont fixées à l'arbre central 6, vers chacune des extrémités de ce dernier, avec le rang de modules 50 interposé entre lesdites butées 10, 11 pour être ainsi maintenu axialement en position sur l'arbre central 6.

Bien entendu, l'invention n'est pas limitée à des moyens de liaison en rotation par clavetage comme illustré. Il est par exemple tout à fait envisageable de recourir alternativement à des moyens de liaison par cannelures ou dentelures. Dans ce cas, l'arbre central 6 ne présente pas une section cylindrique de révolution mais une section qui n'est pas de révolution et dont la forme est conjuguée à celle de chaque paroi annulaire 51A, pour permettre un entraînement en rotation de chaque moyeu par l'arbre central 6 selon l'axe de rotation X-X', sous l'effet du mouvement de rotation imparti par le moteur évoqué précédemment.

Avantageusement, chaque module 50 est pourvu d'un organe d'assemblage conçu pour immobiliser ledit module 50 par rapport aux autres modules dudit rang dans une pluralité de positions angulaires différentes. Dans le mode de réalisation illustré aux figures et décrit dans ce qui précède, l'organe d'assemblage en question consiste en une pluralité de mortaises 8 réparties de manière régulière sur chaque paroi annulaire 51A de chaque moyeu. Par exemple, la paroi annulaire 51A de chaque moyeu est pourvue, comme illustré, de quatre mortaises 8 équiangulairement réparties sur la surface cylindrique de révolution de la paroi annulaire 51A. Ceci permet d'assembler chaque module 50 selon quatre positions angulaires différentes sur l'arbre central 6, en fonction de la mortaise 8, parmi les quatre mortaises disponibles, qui est disposée en regard de la rainure de clavette 7 qui accueille la clavette 9.

Comme illustré aux figures, le rouleau 4 de découpe cyclique comprend une pluralité de dispositifs de liaison chacun attachant l'un desdits couteaux 5 audit support 40 qui le porte. Dans le mode de réalisation illustré aux figures, chaque module 50 embarque ainsi un ou plusieurs dispositifs de liaison pour attacher respectivement le ou lesdits couteaux 5 dudit module 50 auxdits supports 40 correspondants qui font partie dudit module 50.

De préférence, chaque couteau 5 est attaché de façon détachable, c'est-à-dire démontable ou amovible, au support 40 qui le porte. En outre, comme cela ressortira plus en détails dans ce qui suit, chaque dispositif de liaison relie chaque couteau 5 au support 40 qui le porte de façon à autoriser un ou plusieurs degrés de liberté entre le couteau 5 et le support 40, de sorte que le couteau 5 est attaché au support 40 avec une faculté de mobilité (qui peut être inhibée) par rapport à ce dernier. Avantageusement, chaque dispositif de liaison établit une liaison glissière entre chaque couteau 5 et le support 40 qui le porte. En d'autres termes, chaque dispositif de liaison est dans ce cas conçu pour autoriser un degré de liberté, en l'espèce en translation, entre chaque couteau 5 et le support 40 qui le porte. Dans le mode de réalisation préférentiel illustré aux figures, ladite liaison glissière autorise ainsi un coulissement de chaque couteau 5 relativement au support 40 qui le porte, selon une direction de coulissement Y-Y' qui est parallèle à un plan perpendiculaire audit axe de rotation X-X'.

Avantageusement, chaque couteau 5 comprend une gorge 5B tandis que chaque support 40 comprend un coulisseau 40A qui est logé dans la gorge 5B du couteau 5 porté par ledit support 40 et qui coopère avec cette dernière pour former ladite liaison glissière. Ainsi, dans l'exemple illustré aux figures, chaque coulisseau 40A présente une forme sensiblement complémentaire de celle de la gorge 5B, qui lui permet d'être reçu de manière ajustée dans cette dernière, au sein de laquelle il peut glisser selon la direction de coulissement Y-Y'. Ceci permet d'ajuster la position de l'arête de coupe 5A, afin de la positionner de manière adéquate relativement à la sortie de la buse d'extrusion 2 en regard de laquelle est positionné le couteau 5 concerné.

Selon le mode de réalisation préférentiel illustré aux figures, chaque couteau 5 comprend une platine 500, par exemple de forme parallélépipédique, qui avantageusement vient de matière avec le bloc de coupe évoqué précédemment. Avantageusement, lesdits platine 500 et bloc de coupe forment une seule et même pièce d'un seul tenant, réalisée par exemple en un matériau métallique, de préférence en laiton. Ladite platine 500 présente avantageusement une face inférieure 500A au niveau de laquelle est ménagée ladite gorge 5B, et une face supérieure 500B opposée.

Plus précisément, chaque dispositif de liaison comprend un organe de verrouillage/déverrouillage 12 conçu pour évoluer, de préférence de préférence sous l'effet d'un actionnement manuel, entre :
- d'une part une configuration de déverrouillage, dans laquelle il autorise un déplacement relatif du couteau 5 et du support 40 qui le porte, et
- d'autre part une configuration de verrouillage, dans laquelle il immobilise lesdits couteau 5 et support 40 l'un par rapport à l'autre, de préférence dans la position relative instantanée que lesdits couteau 5 et support 40 occupent au moment où l'organe de verrouillage/déverrouillage 12 adopte sa configuration de verrouillage.

Dans le mode de réalisation préférentiel illustré aux figures, l'organe de verrouillage/déverrouillage 12 autorise ainsi, lorsqu'il se trouve en configuration de déverrouillage, un coulissement libre, selon la direction de coulissement Y-Y', du couteau 5 relativement au support 40 qui le porte. Il est donc possible, en configuration de déverrouillage, de faire coulisser le couteau 5 relativement au support 40 qui le porte en imprimant audit couteau 5 un effort d'entraînement en translation, par exemple de façon manuelle, directement ou via un mécanisme dédié (comme décrit plus en détails dans ce qui suit).

Avantageusement, chaque organe de verrouillage/déverrouillage 12 comprend un moyen de serrage actionnable manuellement pour passer, de préférence sous l'effet d'un actionnement manuel :
- d'une configuration serrée, correspondant à ladite configuration de verrouillage, dans laquelle ledit moyen de serrage exerce un effort de serrage qui presse le couteau 5 contre le support 40 de façon suffisante pour immobiliser ainsi lesdits couteau 5 et support 40 l'un par rapport à l'autre,
- à une configuration desserrée, correspondant à ladite configuration de déverrouillage, dans laquelle ledit effort de serrage est relâché pour autoriser un déplacement relatif desdits couteau 5 et support 40,
et inversement.

Avantageusement, chaque moyen de serrage comprend une vis de serrage 120 avec une portion de pressage 120A, qui est formé par exemple par une tête de vis, et une tige filetée de serrage 120B qui s'étend à partir de ladite tête, selon une direction longitudinale Z-Z'. Ladite tête de vis présente par exemple une forme polygonale (par exemple hexagonale) pour pouvoir être entraînée manuellement en rotation, au moyen par exemple d'un outil de type clé. Ladite tête de vis peut alternativement être pourvue d'une empreinte pour coopérer par exemple avec un tournevis.

Comme illustré aux figures, chaque moyen de serrage comprend, outre la vis de serrage 120, une lumière allongée 121, ménagée à travers le couteau 5 et à travers laquelle passe ladite tige filetée de serrage 120B, pour que la portion de pressage 120A puisse venir appuyer sur un bord supérieur de ladite lumière 121, afin d'exercer un effort de pressage du couteau 5 contre le support 40. La lumière allongée 121 est par exemple ménagée pour déboucher d'un côté dans la gorge 5B, et d'un autre côté au niveau d'une face libre du couteau 5 (en l'espèce par exemple la face supérieure 500B de la platine 500). La lumière allongée 121 se présente avantageusement sous la forme d'une lumière oblongue, qui définit la course maximale selon laquelle peut coulisser le couteau 5 relativement au support 40 qui le porte. La portion de pressage 120A, avantageusement formée par la tête de la vis de serrage 120, présente une section supérieure à celle de la lumière allongée 121, de sorte qu'elle peut venir appuyer sur la face supérieure de la platine 500, à la périphérie de la lumière allongée 121.

Ledit moyen de serrage comprend également un orifice taraudé de serrage 122, ménagé dans le support 40 (par exemple dans le coulisseau 40A), dans lequel se visse ladite tige filetée de serrage 120B pour ajuster ledit effort de pressage par vissage/dévissage de ladite tige filetée de serrage 120B.

L'orifice taraudé de serrage 122 forme avantageusement un puits fileté. Il est pourvu d'un filetage interne qui coopère en vissage / dévissage avec le filetage dont est pourvue la tige filetée de serrage 120B, de façon à permettre le vissage/dévissage de cette dernière, par entraînement en rotation de la tête formant avantageusement la portion de pression 120A. Ceci permet à un utilisateur de verrouiller/déverrouiller manuellement le couteau 5 par rapport au support 40 qui le porte. Il est ainsi possible, par dévissage de la tige filetée 120B, d'autoriser un coulissement du couteau 5 relativement au support 40. L'utilisateur peut alors choisir une position adaptée du couteau 5 par rapport à la buse d'extrusion 2 avec laquelle le couteau 5 coopère. Une fois la position souhaitée atteinte, il ne reste plus qu'à visser suffisamment la tige filetée de serrage 120B pour venir bloquer en position le couteau 5 relativement au support 40.

La configuration de déverrouillage correspond ainsi dans ce cas de figure à une configuration desserrée de la vis de serrage 120, ce qui autorise le coulissement relatif de chaque vis de serrage 120 par rapport à chaque platine 500 correspondante, grâce à la forme oblongue de la lumière oblongue 121 par laquelle passe ladite tige filetée de serrage 120B. La configuration de verrouillage correspond quant à elle une configuration de serrage de la vis 120, qui vient bloquer tout coulissement relatif de la platine 500 relativement au coulisseau 40A. L'organe de verrouillage/déverrouillage 12 permet ainsi d'ajuster la position de chaque couteau 5, pour tenir compte par exemple de l'usure et/ou de la configuration des buses 2.

Avantageusement, afin de permettre un réglage précis de la position relative du couteau 5 et du support 40 qui le porte, chaque dispositif de liaison comprend un organe de réglage 13 pour ajuster la position relative du couteau 5 et du support 40 qui le porte, alors que l'organe de verrouillage/déverrouillage 12 est en configuration de déverrouillage. Ledit organe de réglage 13 permet ainsi de régler, de préférence en réponse à un actionnement manuel, la position relative du couteau 5 et du support 40 lorsque l'organe de verrouillage/déverrouillage 12 est en configuration de déverrouillage. Ledit organe de réglage 13 est inhibé (et ne peut de ce fait pas assurer sa fonction de réglage de position) lorsqu'au contraire l'organe de verrouillage/déverrouillage 12 est en configuration de verrouillage. Il est donc nécessaire, afin d'ajuster la position relative du couteau 5 et du support 40 qui le porte avec l'organe de réglage 13, de placer au préalable l'organe de verrouillage/déverrouillage 12 en configuration de déverrouillage. Cela suppose, dans le mode de réalisation illustré aux figures, que l'effort de pressage exercé par la portion de pressage 120A sur le couteau 5 soit suffisamment faible pour autoriser le coulissement relatif du couteau 5 et du support 40.

Avantageusement, chaque organe de réglage 13 comprend une vis de réglage 130 avec une tige filetée de réglage 130A, qui s'étend avantageusement dans le prolongement d'une tête de vis 130B. La tête de vis 130B est avantageusement pourvue d'une conformation (par exemple hexagonale) et/ou d'une empreinte (par exemple de tournevis) destinée à permettre le vissage/dévissage de ladite vis de réglage 130, de préférence au moyen d'un outil adapté (clé, tournevis ou autre).

Chaque organe de réglage 13 comprend en outre un orifice taraudé de réglage 131 dans lequel se visse ladite tige filetée de réglage 130A. L'orifice taraudé de réglage 131 forme ainsi avantageusement un puits fileté conçu pour coopérer en vissage/dévissage avec ladite tige filetée de réglage 130A. Ledit orifice taraudé de réglage 131 est ménagé dans le support 40 (de préférence dans le coulisseau 40A), et s'étend par exemple selon une direction d'extension longitudinale sensiblement perpendiculaire à celle de l'orifice taraudé de serrage 122.

Ladite vis de réglage 130 est avantageusement disposée parallèlement à la direction d'extension longitudinale de la lumière oblongue (formée par la lumière allongée 121) ménagée à travers la platine 500 concernée. La vis de réglage 130 coopère avec le puits fileté avantageusement formé par l'orifice taraudé de réglage 131, de façon à permettre, en tournant ladite vis 130 (vissage ou dévissage), de régler la position relative de la platine 500 relativement au support 40.

Chaque organe de réglage 13 comprend également avantageusement, comme illustré aux figures, une première portion d'appui 132 et une deuxième portion d'appui 133 qui sont portées par ladite vis de réglage 131 et orientées de façon opposée, c'est-à-dire que lesdites première et deuxième portions d'appui 132, 133 sont avantageusement disposées en vis-à-vis l'une de l'autre, comme illustré. Lesdites première et deuxième portions d'appui 132, 133 forment avantageusement des surfaces d'appui planes respectives disposées en face l'une de l'autre et qui s'inscrivent dans des plans respectifs sensiblement perpendiculaires à la direction de coulissement Y-Y' selon laquelle s'étend longitudinalement la tige filetée de réglage 130.

Conformément au mode de réalisation illustré aux figures, lesdites première et deuxième portions d'appui 132, 133 coopèrent avec le couteau 5 pour entraîner un déplacement de ce dernier, selon respectivement des premier et deuxième sens opposés, par vissage, respectivement dévissage, de ladite tige filetée de réglage 130A.

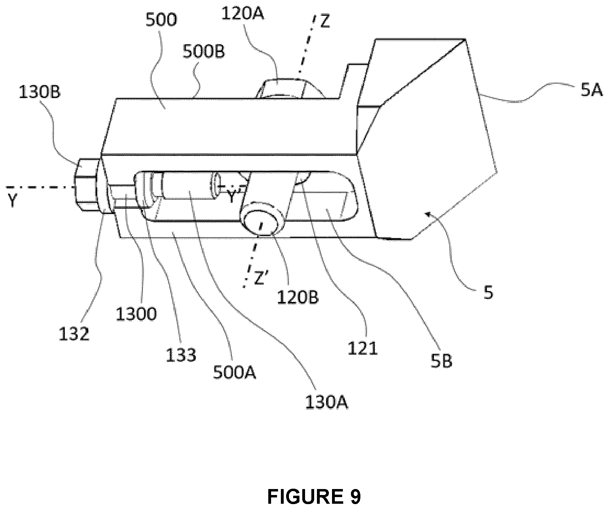

Dans le mode de réalisation illustré aux figures, la première portion d'appui 132 est par exemple formée par une collerette disposée au niveau de la tête de la vis 130 (ou faisant partie de ladite tête de vis), tandis que la deuxième portion d'appui 133 est quant à elle avantageusement formée par une deuxième collerette distincte et distante de ladite première collerette, de façon à ménager entre lesdites première et deuxième collerettes une portion de vis libre 1300 qui est destinée à venir s'insérer dans une encoche correspondante ménagée au niveau de la face inférieure 500A de la platine 500, comme illustré en particulier à la figure 9. La forme de ladite encoche est conjuguée à celle de la portion de vis libre 1300, pour permettre à cette dernière de tourner librement dans le sens du visage ou dévissage tout en restant logée au sein de l'encoche. Dans le sens du vissage, la collerette formant la première portion d'appui 132 vient pousser sur la platine 500 pour entrainer cette dernière en translation parallèlement à la direction de coulissement Y-Y' selon ledit premier sens, tandis que dans le sens du dévissage, la deuxième portion d'appui 133 vient pousser sur la platine 500 pour l'entrainer cette fois en translation dans ledit deuxième sens qui est contraire audit premier sens.

Grâce à cet agencement, il est possible de régler avec précision, de façon simple et rapide, la position relative de chaque couteau 5 par rapport à chaque support 40 qui le porte, selon la direction de coulissement Y-Y', puis de verrouiller en position le couteau 5 relativement au support 40 grâce à la vis de serrage 120.

L'invention concerne également en tant que tel un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées. Le procédé en question peut être mis en oeuvre, conformément à un mode de réalisation préférentiel, au moyen de l'installation de fabrication avec son dispositif de formage 1 décrit ci-avant. Dès lors, l'ensemble de la description qui précède concernant le dispositif 1 s'applique au procédé selon l'invention, et réciproquement la description qui suit relative au procédé selon l'invention s'applique au dispositif de formage 1 précité. Il est ceci étant parfaitement envisageable que le procédé de fabrication selon l'invention soit mis en oeuvre au moyen d'un dispositif de formage qui diffère de celui décrit ci-avant. Dans ce qui suit, par souci de concision, le procédé décrit correspond à celui mis en oeuvre par le dispositif de formage 1 selon l'invention.

Le procédé en question comprend préférentiellement une étape de réception, dans une cuve, de la composition pâteuse à partir de laquelle les pâtes alimentaires sont destinées à être formées. Ladite composition pâteuse est avantageusement conforme à la description qui précède.

Avantageusement, le procédé de fabrication selon l'invention comprend une étape préalable de fabrication de ladite composition pâteuse par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (oeufs, etc.), comme déjà exposé dans ce qui précède en relation avec le dispositif de formage 1.

Le procédé selon l'invention comprend une opération d'extrusion, au cours de laquelle la composition pâteuse passe par des buses d'extrusion 2 pour former, en sortie desdites buses 2, des extrudats à partir desquels les pâtes alimentaires sont destinées à être formées.

Le procédé comprend avantageusement, de préférence avant l'opération d'extrusion, une étape de laminage de ladite composition pâteuse pour la forcer à travers lesdites buses d'extrusion 2. Ladite étape de laminage est effectuée au moyen par exemple de rouleaux motorisés de laminage disposés à l'intérieur de la cuve précitée, pour forcer la composition pâteuse contenue dans la cuve à travers les buses d'extrusion 2, ces dernières communiquant avantageusement avec l'intérieur de ladite cuve.

Le procédé selon l'invention comprend également une opération de découpe cyclique desdits extrudats en sortie desdites buses d'extrusion 2, pour former préférentiellement des pâtons de taille et forme prédéterminées, par exemple des boulettes, des boudins et/ou des palets. Ladite opération de découpe cyclique consiste avantageusement à procéder à une découpe cyclique des extrudats sortant en continu des buses d'extrusion 2 pour obtenir des portions (pâtons) élémentaires.

L'opération de découpe est effectuée au moyen d'un rouleau 4 de découpe cyclique, qui est par exemple conforme à la description qui précède, et qui tourne relativement aux buses d'extrusion 2, selon un axe de rotation X-X'.

Ledit rouleau 4 de découpe cyclique, qui assure ladite opération de découpe cyclique, comprend, comme exposé précédemment, une pluralité de supports 40 ainsi qu'une pluralité de couteaux 5, qui sont avantageusement individuels, distincts, distants les uns des autres et chacun portés par l'un desdits supports 40. Conformément à l'invention, et comme déjà exposé en détail dans ce qui précède en relation avec la description du dispositif de formage 1, le rouleau 4 de découpe cyclique au moyen duquel est effectué l'opération de découpe cyclique comprend également une pluralité de dispositifs de liaison chacun attachant l'un desdits couteaux 5 audit support 40 qui le porte. Chaque dispositif de liaison comprend :
- un organe de verrouillage/déverrouillage 12 conçu pour évoluer entre d'une part une configuration de déverrouillage, dans laquelle il autorise un déplacement relatif du couteau 5 et du support 40 qui le porte, et d'autre part une configuration de verrouillage dans laquelle il immobilise lesdits couteau 5 et support 40 l'un par rapport à l'autre,
- et un organe de réglage 13 conçu pour ajuster la position relative dudit couteau 5 et du support 40 qui le porte, alors que l'organe de verrouillage/déverrouillage 12 est en configuration de déverrouillage.

Avantageusement, ledit procédé de fabrication comprend une étape de maintenance au cours de laquelle, successivement :
- la rotation du rouleau 4 de découpe cyclique est interrompue,
- l'un desdits organes de verrouillage/déverrouillage 12 passe de sa configuration de verrouillage à sa configuration de déverrouillage pour autoriser un déplacement relatif du couteau 5 et du support 40 correspondant ; le passage de la configuration de verrouillage à la configuration de déverrouillage s'effectue par exemple par dévissage de la vis de serrage 120 ;
- la position relative desdits couteau 5 et support 40 est ajustée au moyen de l'organe de réglage 13 correspondant, par exemple par vissage ou dévissage de la vis de réglage 130, jusqu'à atteindre la position relative souhaitée ;
- ledit organe de verrouillage/déverrouillage 12 est ramené en configuration de verrouillage, par exemple par vissage de la vis de serrage 120, pour verrouiller la position relative desdits couteau 5 et support 40.

L'invention permet ainsi d'optimiser de manière simple et rapide le rouleau 4 de découpe cyclique, afin de tenir compte en particulier d'une éventuelle usure des couteaux 5 et/ou d'un changement de buses d'extrusion.

## Revendications

1. Dispositif de formage (1) de pâtes alimentaires destinées à être réchauffées et/ou cuites avant d'être consommées, ledit dispositif de formage (1) comprenant :
- des buses d'extrusion (2) par lesquelles est destinée à passer une composition pâteuse, pour former, en sortie desdites buses (2), des extrudats à partir desquels les pâtes alimentaires sont destinées à être formées,
- un rouleau (4) de découpe cyclique desdits extrudats en sortie desdites buses d'extrusion (2), ledit rouleau (4) de découpe cyclique étant monté mobile à rotation relativement auxdites buses d'extrusion (2), selon un axe de rotation (X-X'),
**caractérisé en ce que** ledit rouleau (4) de découpe cyclique comprend une pluralité de supports (40), une pluralité de couteaux (5) chacun porté par l'un desdits supports (40), ainsi qu'une pluralité de dispositifs de liaison chacun attachant l'un desdits couteaux (5) audit support (40) qui le porte, chaque dispositif de liaison comprenant :
- un organe de verrouillage / déverrouillage (12) conçu pour évoluer entre d'une part une configuration de déverrouillage dans laquelle il autorise un déplacement relatif du couteau (5) et du support (40) qui le porte et d'autre part une configuration de verrouillage dans laquelle il immobilise lesdits couteau (5) et support (40) l'un par rapport à l'autre,
- et un organe de réglage (13) conçu pour ajuster la position relative dudit couteau (5) et du support (40) qui le porte, alors que l'organe de verrouillage / déverrouillage (12) est en configuration de déverrouillage.

2. Dispositif de formage (1) selon la revendication précédente **caractérisé en ce que** chaque dispositif de liaison établit une liaison glissière entre chaque couteau (5) et le support (40) qui le porte.

3. Dispositif de formage (1) selon la revendication précédente **caractérisé en ce que** ladite liaison glissière autorise un coulissement de chaque couteau (5) relativement au support (40) qui le porte selon une direction de coulissement (Y-Y') qui est parallèle à un plan perpendiculaire audit axe de rotation (X-X').

4. Dispositif de formage (1) selon la revendication 2 ou 3 **caractérisé en ce que** chaque couteau (5) comprend une gorge (5B) tandis que chaque support (40) comprend un coulisseau (40A) qui est logé dans la gorge (5B) du couteau (5) porté par ledit support (40) et qui coopère avec cette dernière pour former ladite liaison glissière.

5. Dispositif de formage (1) selon l'une quelconque des revendications précédentes **caractérisé en ce que** chaque organe de verrouillage / déverrouillage (12) comprend un moyen de serrage actionnable manuellement pour passer d'une configuration serrée, correspondant à ladite configuration de verrouillage, dans laquelle ledit moyen de serrage exerce un effort de serrage qui presse le couteau (5) contre le support (40) de façon suffisante pour immobiliser ainsi lesdits couteau (5) et support (40) l'un par rapport à l'autre, à une configuration desserrée, correspondant à ladite configuration de déverrouillage, dans laquelle ledit effort de serrage est relâché pour autoriser un déplacement relatif desdits couteau (5) et support (40).

6. Dispositif de formage (1) selon la revendication précédente **caractérisé en ce que** ledit moyen de serrage comprend :
- une vis de serrage (120) avec une portion de pressage (120A) et une tige filetée de serrage (120B),
- une lumière allongée (121) ménagée à travers ledit couteau (5) et à travers laquelle passe ladite tige filetée de serrage (120B), pour que la portion de pressage (120A) puisse venir appuyer sur un bord supérieur de ladite lumière (121), afin d'exercer un effort de pressage du couteau (5) contre le support (40),
- un orifice taraudé de serrage (122), ménagé dans le support (40), dans lequel se visse ladite tige fileté de serrage (120B) pour ajuster ledit effort de pressage par vissage / dévissage de ladite tige filetée de serrage (120B).

7. Dispositif de formage (1) selon l'une quelconque des revendications précédentes **caractérisé en ce que** chaque organe de réglage (13) comprend :
- une vis de réglage (130) avec une tige filetée de réglage (130A),
- un orifice taraudé de réglage (131), qui est ménagé dans le support (40) et dans lequel se visse ladite tige fileté de réglage (130A),
- des première et deuxième portions d'appui (132, 133) qui sont portées par ladite vis de réglage (131) et orientées de façon opposée,
lesdites première et deuxième portions d'appui (132, 133) coopérant avec ledit couteau (5) pour entraîner en déplacement ce dernier selon respectivement des premier et deuxième sens opposés par vissage, respectivement dévissage, de ladite tige fileté de réglage (130A).

8. Dispositif de formage (1) selon l'une quelconque des revendications précédentes **caractérisé en ce que** lesdites buses d'extrusion (2) sont disposées en rang les unes à côté et à distance des autres, lesdits couteaux (5) étant destinés à suivre des trajectoires circulaires respectives, sous l'effet de la rotation dudit rouleau (4) de découpe cyclique, chaque buse d'extrusion (2) étant positionnée au droit d'une seule desdites trajectoires circulaires pour que chaque couteau (5) assure la découpe cyclique d'un seul desdits extrudats issu d'une seule desdites buses d'extrusion (2).

9. Dispositif de formage (1) selon l'une quelconque des revendications précédentes **caractérisé en ce que** lesdits couteaux (5) sont répartis en une pluralité de groupes de n couteaux, avec n ≥ 2, chacun desdits groupes présentant une symétrie de rotation discrète d'ordre n selon ledit axe de rotation (X-X'), lesdits groupes étant répartis à intervalle régulier en rang les uns derrière les autres le long dudit axe de rotation (X-X'), avec un décalage angulaire entre deux groupes adjacents.

10. Dispositif de formage (1) selon l'une quelconque des revendications précédentes **caractérisé en ce que** ledit rouleau (4) de découpe cyclique est modulaire et comprend une pluralité de modules (50), chacun desdits modules (50) comprenant au moins l'un desdits couteaux (5) avec le support (40) qui le porte, lesdits modules (50) étant assemblés en rang les uns aux autres pour former un sous-ensemble unitaire de modules (50) immobilisés les uns par rapport aux autres.

11. Dispositif de formage (1) selon la revendication précédente **caractérisé en ce que** chaque module (50) est pourvu d'un organe d'assemblage conçu pour immobiliser ledit module (50) par rapport aux autres modules dudit rang de modules dans une pluralité de positions angulaires différentes.

12. Installation de fabrication de pâtes alimentaires destinées à être réchauffées et/ou cuites avant d'être consommées, ladite installation incluant au moins :
- un poste de fabrication d'une composition pâteuse à partir de laquelle lesdites pâtes alimentaires sont destinées à être fabriquées,
- un dispositif de formage (1) selon l'une quelconque des revendications précédentes.

13. Procédé de fabrication de pâtes alimentaires destinées à être réchauffées et/ou cuites avant d'être consommées, ledit procédé comprenant :
- une opération d'extrusion au cours de laquelle une composition pâteuse passe par des buses d'extrusion (2) pour former, en sortie desdites buses (2), des extrudats à partir desquels les pâtes alimentaires sont destinées à être formées,
- une opération de découpe cyclique desdits extrudats en sortie desdites buses d'extrusion (2),
**caractérisé en ce que** ladite opération de découpe cyclique est effectuée au moyen d'un rouleau (4) de découpe cyclique qui tourne relativement auxdites buses d'extrusion (2), selon un axe de rotation (X-X'), ledit rouleau (4) de découpe cyclique comprenant une pluralité de supports (40), une pluralité de couteaux (5) chacun porté par l'un desdits supports (40), ainsi qu'une pluralité de dispositifs de liaison chacun attachant l'un desdits couteaux (5) audit support (40) qui le porte, chaque dispositif de liaison comprenant :
- un organe de verrouillage / déverrouillage (12) conçu pour évoluer entre d'une part une configuration de déverrouillage dans laquelle il autorise un déplacement relatif du couteau (5) et du support (40) qui le porte et d'autre part une configuration de verrouillage dans laquelle il immobilise lesdits couteau (5) et support (40) l'un par rapport à l'autre,
- et un organe de réglage (13) conçu pour ajuster la position relative dudit couteau (5) et du support (40) qui le porte, alors que l'organe de verrouillage / déverrouillage (12) est en configuration de déverrouillage.

14. Procédé de fabrication selon la revendication 13 **caractérisé en ce qu'**il comprend une étape de maintenance au cours de laquelle, successivement :
- la rotation du rouleau (4) de découpe cyclique est interrompue,
- l'un desdits organe de verrouillage / déverrouillage (12) passe de sa configuration de verrouillage à sa configuration de déverrouillage pour autoriser un déplacement relatif du couteau (5) et du support (40) correspondant,
- la position relative desdits couteau (5) et support (40) est ajustée au moyen de l'organe de réglage (13) correspondant,
- ledit organe de verrouillage / déverrouillage (12) est ramené en configuration de verrouillage.

15. Procédé de fabrication selon la revendication 13 ou 14 **caractérisé en ce qu'**il comprend une étape de laminage de ladite composition pâteuse pour la forcer à travers lesdites buses d'extrusion (2) et une étape préalable de fabrication de ladite composition pâteuse par malaxage et cuisson d'un mélange formé à partir au moins d'une farine et / ou d'une semoule d'au moins une céréale contenant des protéines capables de former du gluten et d'un liquide d'hydratation.
